# DEMANDE DE BREVET EUROPEEN

(11) **EP 4 625 968 A1**
(43) Date de publication de la demande: **01.10.2025**
(21) Numéro de dépôt: 25166484.3
(22) Date de dépôt: 26.03.2025
(51) Int. Cl.: H04N 7/18, G06F 3/01, G06T 19/00, G06V 20/20

(54) **PROCÉDÉS D'OBTENTION D'ÉLÉMENT MULTIMÉDIA ET DE RENDU ENRICHI, DISPOSITIFS ÉLECTRONIQUES, SYSTÈME, PRODUITS PROGRAMME D'ORDINATEUR ET SUPPORTS CORRESPONDANT**

(30) Priorité: 27.03.2024 FR 2403113
(71) Demandeur: Orange, 92130 Issy-les-Moulineaux (FR)
(72) Inventeur: FAURE, Julien, 92326 Chatillon (FR); LAURENT, Sonia, 92326 Chatillon (FR); GAVIGNET, Sébastien, 92326 CHATILLON (FR); MAJDOUB, Selsebil, 92326 CHATILLON (FR)

(57) **Abrégé**

L'invention concerne d'une part un procédé d'obtention d'un élément multimédia, comprenant : une obtention d'un flux audiovisuel représentant un environnement physique ;
une création d'un élément multimédia donnant accès à une valeur d'un premier paramètre d'un jumeau numérique relatif à un premier objet d'intérêt du flux audiovisuel, la valeur étant extraite du jumeau numérique lors d'une captation du flux audiovisuel.

Et d'autre part, un procédé de rendu enrichi d'un premier objet d'intérêt d'un environnement physique, comprenant :
une obtention d'un élément multimédia, ledit élément multimédia donnant accès à une première valeur d'un premier paramètre d'un jumeau numérique relatif audit premier objet d'intérêt ;
une obtention d'une première représentation audiovisuelle d'une première portion dudit jumeau numérique tenant compte de la première valeur obtenue ;
un rendu de la première représentation audiovisuelle dans l'environnement physique.

L'invention concerne aussi les dispositifs électroniques, produits programmes d'ordinateur et supports correspondant.

## Description

### 1.Domaine technique

La présente application se rapporte au domaine des télécommunications et plus précisément au partage d'informations (par exemple via des communications (comme des communications asynchrones)) entre utilisateurs via des terminaux de communication. Elle concerne notamment un procédé d'obtention d'élément multimédia et un procédé de rendu d'un tel élément multimédia, mis en œuvre respectivement par un ou plusieurs dispositif(s) électronique(s), ainsi que les dispositifs électroniques, produits programme d'ordinateur et supports d'enregistrement correspondants.

### 2.Etat de la technique

L'utilisation de moyens électroniques pour partager des informations entre individus est de plus en plus répandu. On distingue en particulier diverses communications, telles que les communications synchrones (comme des appels téléphoniques ou des visioconférences) et les communications asynchrones (par messagerie électronique par exemple).

Les communications asynchrones offrent de nombreux avantages. Ainsi elles permettent d'émettre une information vers un destinataire sans avoir convenu préalablement avec lui d'un rendez-vous ni même se préoccuper de sa disponibilité. Elles aident donc à s'affranchir de contraintes de présence ou d'horaires. Elles sont devenues particulièrement utiles par exemple dans le monde professionnel avec la mondialisation des échanges ou l'essor du télétravail. Que les communications numériques soient synchrones ou asynchrones, elles peuvent donner lieu à des difficultés de compréhension entre les interlocuteurs. En pratique, il est souvent plus simple de faire « passer un message » (par exemple exprimer un sentiment et/ou donner des explications) en face à face. De ce fait, les utilisateurs ont souvent recours à des solutions de type visioconférence (ou messagerie vidéo). Cependant, l'utilisation de techniques vidéo ne résout pas toutes les difficultés de communication entre interlocuteurs, notamment dans le cas de communications asynchrones et/ou de situations complexes.

La présente demande a pour objet de proposer des améliorations à au moins certains des inconvénients de l'état de la technique.

### 3.Exposé de l'invention

Selon un aspect, la présente demande vise à améliorer la situation à l'aide d'un procédé d'obtention d'un élément multimédia.

Dans certains modes de réalisation, ledit procédé comprend une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel.

Dans certains modes de réalisation, ledit élément multimédia comporte en outre au moins un contenu audiovisuel obtenu à partir dudit flux audiovisuel.

Ledit contenu audiovisuel peut par exemple être relatif au moins audit premier objet physique d'intérêt.

Dans certains modes de réalisation, ledit procédé comprend :
une obtention d'un flux audiovisuel représentant au moins une portion d'un environnement physique ;
une création d'un élément multimédia donnant accès à au moins une valeur d'au moins un premier paramètre d'un jumeau numérique relatif à au moins un premier objet d'intérêt dudit flux audiovisuel, ladite valeur étant extraite dudit jumeau numérique lors d'une captation dudit flux audiovisuel.

Selon les modes de réalisation, ledit environnement physique est un environnement réel ou une représentation virtuelle d'un environnement réel par exemple.

Dans au moins certains modes de réalisation, ledit élément multimédia comporte en outre au moins un contenu audiovisuel obtenu à partir dudit flux audiovisuel capté.

Dans au moins certains modes de réalisation, ledit contenu audiovisuel est obtenu par extraction à partir dudit flux audiovisuel capté.

Dans au moins certains modes de réalisation, ledit contenu audiovisuel est obtenu par transformation d'au moins une portion dudit flux audiovisuel capté.

Dans au moins certains modes de réalisation, ladite transformation comprend un remplacement d'au moins un objet d'intérêt d'une scène dudit flux capté par une représentation virtuelle dudit objet d'intérêt.

Dans au moins certains modes de réalisation, ledit élément multimédia comporte au moins deux valeurs dudit premier paramètre, lesdites au moins deux valeurs correspondant à au moins une fluctuation dudit premier paramètre pendant ladite captation.

Dans au moins certains modes de réalisation, ledit premier objet est sélectionné, parmi les objets d'intérêt détectés dans ledit flux audiovisuel, en tenant compte d'une position courante et/ou d'une orientation courante dudit premier objet dans au moins une scène dudit flux audiovisuel, relativement à au moins une position et/ou une orientation d'au moins un second objet d'intérêt dudit flux audiovisuel.

Dans au moins certains modes de réalisation, ledit second objet est relatif à un individu présent dans ledit flux audiovisuel. Ledit second objet peut par exemple correspondre à une représentation de l'individu lui-même (personnage réel) ou à une représentation virtuelle de cet individu (un avatar par exemple).

Dans au moins certains modes de réalisation, ladite au moins une position dudit second objet comprend une pluralité de positions, représentatives d'un déplacement dudit second objet dans ledit flux audiovisuel.

Dans au moins certains modes de réalisation, ledit premier objet, respectivement ledit second objet, est sélectionné, parmi les objets d'intérêt détectés dans ledit flux audiovisuel, en tenant compte d'une similarité visuelle et/ou auditive entre ledit premier objet, respectivement ledit second objet, et au moins un objet de référence.

Dans au moins certains modes de réalisation, ledit premier objet, respectivement ledit second objet, est sélectionné, parmi les objets d'intérêt détectés dans ledit flux audiovisuel, en tenant compte d'une désignation visuelle et/ou audio dudit premier objet, respectivement dudit second objet, dans au moins une scène dudit flux audiovisuel.

Dans au moins certains modes de réalisation, ledit premier objet, respectivement ledit second objet, est sélectionné, parmi les objets d'intérêt détectés dans ledit flux audiovisuel, en tenant compte d'une désignation manuelle dudit premier objet, respectivement dudit second objet, via une interface utilisateur.

Dans au moins certains modes de réalisation, ladite désignation manuelle est effectuée pendant et/ou après ladite captation.

Dans au moins certains modes de réalisation, ledit élément multimédia créé comprend des valeurs relatives à au moins deux paramètres dudit jumeau numérique et ledit procédé comprend, après ladite création, un filtrage desdites valeurs desdits paramètres.

Dans au moins certains modes de réalisation, ledit filtrage tient compte desdits objets d'intérêts auxquels sont relatifs lesdits paramètres.

Par exemple, grâce au filtrage, on peut ne conserver que des valeurs de paramètres relatifs à certain(s) objet(s) d'intérêt(s) ou supprimer des valeurs de paramètres relatifs à certain(s) objet(s) d'intérêt(s).

Selon un autre aspect, la présente demande concerne un procédé de rendu enrichi .

Dans certains modes de réalisation, la présente demande concerne un procédé de rendu enrichi d'au moins un premier objet physique d'intérêt d'un environnement physique, ledit procédé comprenant :
une obtention d'un élément multimédia, ledit élément multimédia donnant accès à au moins une première valeur d'au moins un premier paramètre d'un jumeau numérique relatif au moins audit premier objet d'intérêt ;
une obtention d'au moins une première représentation audiovisuelle d'au moins une première portion dudit jumeau numérique tenant compte de ladite première valeur obtenue ;
un rendu de ladite première représentation audiovisuelle dans ledit environnement physique. Dans au moins certains modes de réalisation, ledit élément multimédia donne accès à au moins un contenu audiovisuel relatif audit premier objet d'intérêt et le procédé comprend un rendu, conjoint audit rendu de ladite première représentation audiovisuelle, d'au moins une partie dudit contenu audiovisuel.

Dans certains modes de réalisation, la présente demande concerne un procédé de rendu enrichi d'au moins un premier objet physique d'intérêt, ledit procédé comprenant :
une obtention d'un élément multimédia donnant accès à au moins un contenu audiovisuel relatif au moins audit premier objet physique d'intérêt et à au moins une première valeur d'au moins un premier paramètre d'un jumeau numérique, ladite première valeur étant obtenue lors d'une captation d'un flux audiovisuel, ledit contenu audiovisuel étant obtenu à partir dudit flux audiovisuel, et ledit jumeau numérique étant relatif au moins audit premier objet physique d'intérêt ;
une obtention d'au moins une première représentation audiovisuelle d'au moins une première portion dudit premier objet physique d'intérêt tenant compte de ladite première valeur obtenue dudit paramètre dudit jumeau numérique;
un rendu conjoint de ladite première représentation audiovisuelle et d'au moins une partie dudit contenu audiovisuel. Dans au moins certains modes de réalisation, ladite première valeur est une valeur, à un instant antérieur à ladite obtention dudit élément multimédia, dudit paramètre. Dans au moins certains modes de réalisation, ladite au moins une première portion dudit jumeau numérique comporte ledit premier objet d'intérêt

Dans au moins certains modes de réalisation, le procédé de rendu enrichi comprend un rendu, conjoint audit rendu de ladite première représentation audiovisuelle, d'une seconde représentation audiovisuelle d'au moins une seconde portion dudit jumeau numérique tenant compte d'au moins une valeur courante dudit paramètre dudit jumeau numérique.

Dans au moins certains modes de réalisation, ladite au moins une seconde portion dudit jumeau numérique comporte ledit premier objet d'intérêt.

Dans au moins certains modes de réalisation, ledit procédé de rendu enrichi comprend une mise en évidence dudit au moins un premier objet d'intérêt dans ladite première, respectivement seconde, représentation audiovisuelle.

Dans au moins certains modes de réalisation, ledit rendu, conjoint, de ladite première représentation audiovisuelle est mis en œuvre de façon conditionnelle en tenant compte d'une présence d'un intervenant dans ledit environnement physique.

Dans au moins certains modes de réalisation, ledit rendu de ladite première représentation audiovisuelle est mis en œuvre de façon conditionnelle en tenant compte d'un profil dudit intervenant présent.

Dans au moins certains modes de réalisation, ledit rendu, conjoint, de ladite première représentation audiovisuelle est mis en œuvre de façon conditionnelle en tenant compte d'une proximité géographique entre ledit intervenant présent et un équipement dudit environnement physique.

Dans au moins certains modes de réalisation, ledit équipement appartient à un groupe comprenant :
un dispositif de rendu implémentant ledit procédé de rendu enrichi;
un dispositif de rendu de ladite première et/ou seconde représentation audiovisuelle ;
ledit au moins un premier objet d'intérêt.

Les caractéristiques, présentées isolément dans la présente demande en lien avec certains modes de réalisation d'au moins un des procédés d'obtention et/ou de rendu de la présente demande peuvent être combinées entre elles selon d'autres modes de réalisation de ce procédé.

Selon un autre aspect, la présente demande concerne également un dispositif électronique adapté à mettre en oeuvre au moins l'un des procédés d'obtention et/ou de rendu enrichi de la présente demande dans l'un quelconque de ses modes de réalisations.

Par exemple, la présente demande concerne ainsi un dispositif électronique comprenant un moins un processeur configuré pour mettre en œuvre une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel.

Par exemple, la présente demande concerne ainsi un dispositif électronique comprenant un moins un processeur configuré pour une obtention d'un élément multimédia, ladite obtention comprenant:
une obtention d'un flux audiovisuel représentant au moins une portion d'un environnement physique ;
une création d'un élément multimédia donnant accès à au moins une valeur d'au moins un premier paramètre d'un jumeau numérique relatif à au moins un premier objet d'intérêt dudit flux audiovisuel, ladite valeur étant extraite dudit jumeau numérique lors d'une captation dudit flux audiovisuel.

Par exemple, la présente demande concerne ainsi un dispositif électronique comprenant un moins un processeur configuré pour un rendu enrichi d'au moins un premier objet d'intérêt d'un environnement physique, une mise en œuvre dudit rendu enrichi comprenant:
une obtention d'un élément multimédia, ledit élément multimédia donnant accès à au moins une première valeur d'au moins un premier paramètre d'un jumeau numérique relatif au moins audit premier objet d'intérêt ;
une obtention d'au moins une première représentation audiovisuelle d'au moins une première portion dudit jumeau numérique tenant compte de ladite première valeur obtenue ;
un rendu de ladite première représentation audiovisuelle dans ledit environnement physique.

Par exemple, la présente demande concerne ainsi un dispositif électronique comprenant un moins un processeur configuré pour:
une obtention d'un élément multimédia donnant accès à au moins un contenu audiovisuel relatif au moins à un premier objet physique d'intérêt et à au moins une première valeur d'au moins un premier paramètre d'un jumeau numérique, ladite première valeur étant obtenue lors d'une captation d'un flux audiovisuel, ledit contenu audiovisuel étant obtenu à partir dudit flux audiovisuel, et ledit jumeau numérique étant relatif au moins audit premier objet physique d'intérêt ;
une obtention d'au moins une première représentation audiovisuelle d'au moins une première portion dudit premier objet physique d'intérêt tenant compte de ladite première valeur obtenue dudit paramètre dudit jumeau numérique;
un rendu conjoint de ladite première représentation audiovisuelle et d'au moins une partie dudit contenu audiovisuel.

Selon un autre aspect, la présente demande concerne également un système de télécommunication comprenant au moins un premier dispositif électronique adapté à mettre en œuvre le procédé d'obtention de la présente demande dans l'un quelconque de ses modes de réalisations et au moins un second dispositif électronique adapté à mettre en œuvre le procédé de rendu de la présente demande dans l'un quelconque de ses modes de réalisations.

Ainsi, la présente demande concerne par exemple un système comprenant au moins un premier dispositif électronique comprenant un moins un processeur configuré pour une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel ;

Et au moins un second dispositif électronique comprenant un moins un processeur configuré pour un rendu enrichi dudit au moins un premier objet physique d'intérêt, une mise en œuvre dudit rendu enrichi comprenant:
une obtention dudit élément multimédia, ledit élément multimédia donnant accès à ladite au moins une première valeur dudit au moins un premier paramètre dudit jumeau numérique,
une obtention d'au moins une première représentation audiovisuelle d'au moins une première portion dudit premier objet d'intérêt tenant compte de ladite première valeur obtenue dudit paramètre dudit jumeau numérique;
un rendu de ladite première représentation audiovisuelle.

Ainsi, la présente demande concerne par exemple un système de télécommunication comprenant au moins un premier dispositif électronique comprenant un moins un processeur configuré pour une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel ; et à au moins un contenu audiovisuel obtenu à partir dudit flux audiovisuel;

Et au moins un second dispositif électronique comprenant un moins un processeur configuré pour un rendu enrichi dudit au moins un premier objet physique d'intérêt, une mise en œuvre dudit rendu enrichi comprenant:
une obtention dudit élément multimédia,
une obtention d'au moins une première représentation audiovisuelle d'au moins une première portion dudit premier objet d'intérêt tenant compte de ladite première valeur obtenue dudit paramètre dudit jumeau numérique;
un rendu conjoint de ladite première représentation audiovisuelle et d'au moins une partie dudit contenu audiovisuel.

Ledit contenu audiovisuel peut par exemple être relatif au moins audit premier objet physique d'intérêt.

Ainsi, la présente demande concerne par exemple un système de télécommunication comprenant au moins un premier dispositif électronique comprenant un moins un processeur configuré pour une obtention d'un élément multimédia, ladite obtention comprenant :
une obtention d'un flux audiovisuel représentant au moins une portion d'un environnement physique ;
une création d'un élément multimédia donnant accès à au moins une première valeur d'au moins un premier paramètre d'un jumeau numérique relatif à au moins un premier objet d'intérêt dudit flux audiovisuel, ladite première valeur étant extraite dudit jumeau numérique lors d'une captation dudit flux audiovisuel ;

Et au moins un second dispositif électronique comprenant un moins un processeur configuré pour un rendu enrichi dudit au moins un premier objet d'intérêt, une mise en œuvre dudit rendu enrichi comprenant:
une obtention dudit élément multimédia;
une obtention d'au moins une première représentation audiovisuelle d'au moins une première portion dudit jumeau numérique tenant compte de ladite première valeur;
un rendu de ladite première représentation audiovisuelle dans ledit environnement physique. La présente demande concerne aussi un programme d'ordinateur comprenant des instructions pour la mise en œuvre des divers modes de réalisation d'au moins un des procédés d'obtention et/ou de rendu enrichi ci-dessus, lorsque le programme est exécuté par un processeur et un support d'enregistrement lisible par un dispositif électronique et sur lequel est enregistré le programme d'ordinateur ainsi que le support d'informations correspondant .

Par exemple, la présente demande concerne ainsi un programme d'ordinateur comprenant des instructions pour la mise en œuvre, lorsque le programme est exécuté par un processeur d'un dispositif électronique, d'un procédé d'obtention d'un élément multimédia, ledit procédé comprenant une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel.

Par exemple, la présente demande concerne ainsi un programme d'ordinateur comprenant des instructions pour la mise en œuvre, lorsque le programme est exécuté par un processeur d'un dispositif électronique, d'un procédé d'obtention d'un élément multimédia, ledit procédé comprenant :
une obtention d'un flux audiovisuel représentant au moins une portion d'un environnement physique ;
une création d'un élément multimédia donnant accès à au moins une valeur d'au moins un premier paramètre d'un jumeau numérique relatif à au moins un premier objet d'intérêt dudit flux audiovisuel, ladite valeur étant extraite dudit jumeau numérique lors d'une captation dudit flux audiovisuel.

Par exemple, la présente demande concerne ainsi un programme d'ordinateur comprenant des instructions pour la mise en œuvre, lorsque le programme est exécuté par un processeur d'un dispositif électronique, d'un procédé de rendu enrichi d'au moins un premier objet d'intérêt d'un environnement physique, ledit procédé comprenant:
une obtention d'un élément multimédia, ledit élément multimédia donnant accès à au moins une première valeur d'au moins un premier paramètre d'un jumeau numérique relatif au moins audit premier objet d'intérêt;
une obtention d'au moins une première représentation audiovisuelle d'au moins une première portion dudit jumeau numérique tenant compte de ladite première valeur obtenue;
un rendu de ladite première représentation audiovisuelle dans ledit environnement physique.

Par exemple, la présente demande concerne ainsi un programme d'ordinateur comprenant des instructions pour la mise en œuvre, lorsque le programme est exécuté par un processeur d'un dispositif électronique, d'un procédé de rendu enrichi d'au moins un premier objet physique d'intérêt d'un environnement physique, ledit procédé comprenant:
une obtention d'un élément multimédia donnant accès à au moins un contenu audiovisuel relatif au moins audit premier objet physique d'intérêt et à au moins une première valeur d'au moins un premier paramètre d'un jumeau numérique, ladite première valeur étant obtenue lors d'une captation d'un flux audiovisuel, ledit contenu audiovisuel étant obtenu à partir dudit flux audiovisuel, et ledit jumeau numérique étant relatif au moins audit premier objet physique d'intérêt ;
une obtention d'au moins une première représentation audiovisuelle d'au moins une première portion dudit premier objet physique d'intérêt tenant compte de ladite première valeur obtenue dudit paramètre dudit jumeau numérique;
un rendu conjoint de ladite première représentation audiovisuelle et d'au moins une partie dudit contenu audiovisuel.

Par exemple, la présente demande concerne aussi un support d'informations lisible par un processeur d'un dispositif électronique et sur lequel est enregistré un programme d'ordinateur comprenant des instructions pour la mise en œuvre, lorsque le programme est exécuté par le processeur, d'un procédé d'obtention d'un élément multimédia, ledit procédé comprenant une création d'un élément multimédia donnant accès à au moins une première valeur d'au moins un premier paramètre d'un jumeau numérique, ladite première valeur étant obtenue lors d'une captation d'un flux audiovisuel, et ledit jumeau numérique étant relatif à au moins un premier objet physique d'intérêt capté par ledit flux audiovisuel.

Par exemple, la présente demande concerne aussi un support d'informations lisible par un processeur d'un dispositif électronique et sur lequel est enregistré un programme d'ordinateur comprenant des instructions pour la mise en œuvre, lorsque le programme est exécuté par le processeur, d'un procédé d'obtention d'un élément multimédia, ledit procédé comprenant :
une obtention d'un flux audiovisuel représentant au moins une portion d'un environnement physique;
une création d'un élément multimédia donnant accès à au moins une valeur d'au moins un premier paramètre d'un jumeau numérique relatif à au moins un premier objet d'intérêt dudit flux audiovisuel, ladite valeur étant extraite dudit jumeau numérique lors d'une captation dudit flux audiovisuel.

Par exemple, la présente demande concerne aussi un support d'enregistrement lisible par un processeur d'un dispositif électronique et sur lequel est enregistré un programme d'ordinateur comprenant des instructions pour la mise en œuvre, lorsque le programme est exécuté par le processeur, d'un procédé de rendu enrichi d'au moins un premier objet d'intérêt d'un environnement physique, ledit procédé comprenant:
une obtention d'un élément multimédia, ledit élément multimédia donnant accès à au moins une première valeur d'au moins un premier paramètre d'un jumeau numérique relatif au moins audit premier objet d'intérêt ;
une obtention d'au moins une première représentation audiovisuelle d'au moins une première portion dudit jumeau numérique tenant compte de ladite première valeur obtenue ;
un rendu de ladite première représentation audiovisuelle dans ledit environnement physique.

Par exemple, la présente demande concerne aussi un support d'enregistrement lisible par un processeur d'un dispositif électronique et sur lequel est enregistré un programme d'ordinateur comprenant des instructions pour la mise en œuvre, lorsque le programme est exécuté par le processeur, d'un procédé de rendu enrichi d'au moins un premier objet physique d'intérêt d'un environnement physique, ledit procédé comprenant:
une obtention d'un élément multimédia donnant accès à au moins un contenu audiovisuel relatif au moins audit premier objet physique d'intérêt et à au moins une première valeur d'au moins un premier paramètre d'un jumeau numérique, ladite première valeur étant obtenue lors d'une captation d'un flux audiovisuel, ledit contenu audiovisuel étant obtenu à partir dudit flux audiovisuel, et ledit jumeau numérique étant relatif au moins audit premier objet physique d'intérêt ;
une obtention d'au moins une première représentation audiovisuelle d'au moins une première portion dudit premier objet physique d'intérêt tenant compte de ladite première valeur obtenue dudit paramètre dudit jumeau numérique;
un rendu conjoint de ladite première représentation audiovisuelle et d'au moins une partie dudit contenu audiovisuel.

Les programmes mentionnés ci-dessus peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Les supports d'informations (ou d'enregistrements) mentionnés dans la présente demande peuvent être n'importe quelle entité ou quel dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

Un tel moyen de stockage peut par exemple être un disque dur, une mémoire flash, etc.

D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations (ou d'enregistrement) peut être un circuit intégré dans lequel un programme est incorporé, le circuit étant adapté pour exécuter ou pour être utilisé dans l'exécution de l'un quelconque des modes de réalisation d'au moins un des procédés objet de la présente demande de brevet.

De façon générale, par obtention d'un élément, on entend dans la présente demande par exemple une réception de cet élément depuis un réseau de communication, une acquisition de cet élément (via par exemple des éléments d'interface utilisateur ou des capteurs), une création de cet élément par divers moyens de traitement tels que par copie, encodage, décodage, transformation etc. et/ou un accès de cet élément depuis un support de stockage local ou distant accessible à au moins un dispositif mettant en œuvre, au moins partiellement, cette obtention.

### 4.Brève description des dessins

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
La [Fig 1] présente une vue simplifiée d'un système, cité à titre d'exemple, dans lequel au moins certains modes de réalisation des procédés d'obtention et de rendu enrichi de la présente demande peuvent être implémentés,
La [Fig 2] présente une vue simplifiée d'un dispositif adapté à mettre en oeuvre au moins certains modes de réalisation du procédé d'obtention et/ou de rendu enrichi de la présente demande,
La [Fig 3A] présente un aperçu du procédé d'obtention de la présente demande, dans certains de ses modes de réalisation
La [Fig 3B] présente un aperçu du procédé d'obtention de la présente demande, dans certains de ses modes de réalisation
La [Fig 4] présente un aperçu du procédé de rendu enrichi de la présente demande, dans certains de ses modes de réalisation
La [Fig 5] illustre un exemple d'obtention d'un élément multimédia et de rendu enrichi d'un premier objet d'intérêt à partir de cet élément multimédia selon au moins certains modes de réalisation des procédés de la présente demande.

### 5.Description des modes de réalisation

La présente demande vise à apporter une solution nouvelle, susceptible de faciliter les communications, notamment asynchrones, entre utilisateurs d'un système de télécommunication. Elle peut par exemple permettre d'aider un utilisateur à décrire, optionnellement en complément d'un message comprenant un contenu audiovisuel, au moins un objet d'intérêt d'un environnement physique, réel (ou en variante une représentation virtuelle de cet environnement ) qui peut être divers selon les modes de réalisation. Il peut par exemple s'agir d'une usine, d'un jardin, ou d'un lieu public. On appellera également cet environnement physique « environnement de captation » dans la présente demande.

Plus précisément, la présente demande propose, selon un premier aspect, de créer, à l'initiative d'un utilisateur « producteur », un élément multimédia obtenu notamment à partir d'un flux audiovisuel (par exemple une séquence vidéo) représentant une première portion de l'environnement physique, cette première portion comprenant un objet d'intérêt (pour l'utilisateur « producteur » par exemple) ou étant située à proximité d'un tel objet. L'élément multimédia peut comprendre (ou donner accès à) des informations relatives à l'objet d'intérêt, obtenues lors de la captation du flux audiovisuel, et provenant d'un jumeau numérique. Ces informations peuvent par exemple être relatives à l'état courant de la représentation de l'objet d'intérêt dans le jumeau numérique lors de la captation du flux audiovisuel, et/ou à son identification, et/ou à son positionnement . Les informations peuvent comprendre au moins une représentation audiovisuelle de cet objet d'intérêt.

Optionnellement, l'élément multimédia peut comprendre (ou donner accès à) un contenu audiovisuel obtenu à partir d'au moins une portion du flux audiovisuel capté.

Le jumeau numérique peut être par exemple un jumeau numérique spécifique à l'objet d'intérêt ou un jumeau numérique relatif au moins à la première portion de l'environnement physique (par exemple un jumeau numérique de l'environnement physique complet (ie dans son ensemble) y compris optionnellement des avatars de personnes présentes dans l'environnement). En variante, l'élément multimédia peut comprendre, non pas les informations relatives à l'objet d'intérêt dans le jumeau numérique mais un lien donnant accès à ces informations. L'élément multimédia comprend donc des informations d'un jumeau numérique relatives à au moins un objet d'intérêt du flux audiovisuel et peut comprendre optionnellement un contenu audiovisuel issu au moins partiellement de ce flux et en lien avec cet objet d'intérêt. Selon un second aspect, au moins certaines données en lien avec l'élément multimédia créé peuvent ensuite être restituées (rendues) à un instant ultérieur à un utilisateur « consommateur ». Le rendu peut varier selon les modes de réalisation. Par exemple, dans certains modes de réalisation, il peut s'agir d'un rendu d'au moins certaines des informations du jumeau numérique (telles que des valeurs de paramètres) comprises dans l'élément multimédia (ou en variante auxquelles l'élément multimédia donne accès) et d'un rendu conjoint d'au moins une représentation audiovisuelle (ie audio et/ou visuelle) d'au moins un objet d'intérêt auquel est relative au moins une information du jumeau numérique obtenue à partir de l'élément multimédia. Dans certains modes de réalisation, le rendu peut comprendre en outre un rendu (conjoint avec l'information du jumeau numérique et la représentation audiovisuelle) d'un contenu audiovisuel que comprend l'élément multimédia (ou en variante auquel il donne accès). Comme expliqué ci-avant, les informations que comprend l'élément multimédia (ou en variante auquel il donne accès) ont été obtenues lors la captation d'un flux audiovisuel comprenant un objet d'intérêt auquel au moins certaines de ces informations sont relatives. Le contenu rendu peut notamment avoir été obtenu à partir du flux audiovisuel capté.

Dans certains modes de réalisation, (par exemple lorsque les informations de l'élément multimédia sont horodatées), le rendu de ces informations peut par exemple être synchronisé temporellement avec la représentation audiovisuelle rendue et/ou avec le contenu optionnellement rendu. Dans certains modes de réalisation, le rendu de données en lien avec l'élément multimédia peut comprendre un rendu conjoint d'informations du jumeau numérique comprises dans l'élément multimédia et d'informations du jumeau numérique à l'instant courant équivalentes aux informations rendues comprises dans l'élément multimédia (comme le rendu conjoint de valeurs de paramètres du jumeau numérique comprises dans l'élément multimédia (et relatives au moment de la captation) et des valeurs courantes de ces paramètres).

Par exemple, le rendu peut inclure une information du jumeau numérique représentative de la position de l'objet d'intérêt dans l'environnement physique au moment de la captation du flux audiovisuel. Selon un autre exemple, le rendu peut inclure un rendu d'une information du jumeau numérique relative à l'état de l'objet d'intérêt au moment de la captation et une information du jumeau numérique équivalente (même paramètre) relative à l'état courant (au moment du rendu) de l'objet d'intérêt.

Le rendu peut aussi inclure optionnellement d'autres informations comprises dans l'élément multimédia (par exemple au moins une horodate relative à la captation du flux audiovisuel, ou des informations relatives à l'état du jumeau numérique lors de la captation du flux audiovisuel). Le contenu obtenu à partir du flux capté peut par exemple représenter un premier objet d'intérêt et un second objet d'intérêt de l'environnement physique, le second objet d'intérêt étant par exemple un individu (réel ou un avatar), comme l'utilisateur producteur ou un tiers, présent dans l'environnement physique et désignant (via des indications visuelles ou vocales par exemple) ou interagissant avec le premier objet d'intérêt.

Ainsi, grâce au procédé de la présent demande, un individu peut par exemple être filmé (dans un flux audiovisuel) pendant qu'il désigne du doigt ou du regard certains éléments de l'environnement physique, qui seront ensuite rendus (par exemple lors d'un rendu ultérieur d'au moins une portion du film), dans leur position lors de la captation du film. Le rendu peut notamment se faire également dans l'environnement physique, de façon à rendre les éléments désignés « in situ » et optionnellement (dans le cas d'un rendu en réalité mixte) en mettant en évidence leur position courante. Un tel mode de réalisation peut aider à mettre en évidence un mouvement d'un objet d'intérêt entre sa captation et son rendu.

Un tel procédé peut ainsi aider un utilisateur producteur à générer de façon plus simple des explications et faciliter en même temps leur compréhension par un utilisateur consommateur. Selon les modes de réalisation, l'élément multimédia peut être destiné à être communiqué (ie transmis) à un tiers (« destinataire ») via une communication (par exemple asynchrone), ou à être simplement mis à disposition, pour un rendu enrichi d'un objet d'intérêt de cet élément multimédia, à un tiers « consommateur » potentiel. Par exemple, le rendu enrichi peut être mis en oeuvre à la demande d'un tiers (authentifié par exemple) ou sans même une initiative du tiers (par exemple il peut s'agir d'un rendu continuel (diffusion en boucle) ou d'un rendu effectué suite à une détection d'un passage à proximité d'un dispositif de rendu enrichi de l'objet d'intérêt) .

A titre d'exemple, la présente demande peut notamment s'appliquer lorsque des objets sont en mouvement lors de la captation d'un flux audiovisuel (le message d'un utilisateur « producteur »). En effet, il peut être important de sauvegarder ces mouvements pour la bonne compréhension du message. La présente demande propose une solution permettant par exemple de créer (pour rendu enrichi ultérieur) un « message » in situ tenant compte des possibles changements, entre le moment de la captation du flux et le rendu du « message », dans l'environnement physique où a été capté le flux comportant ce message.

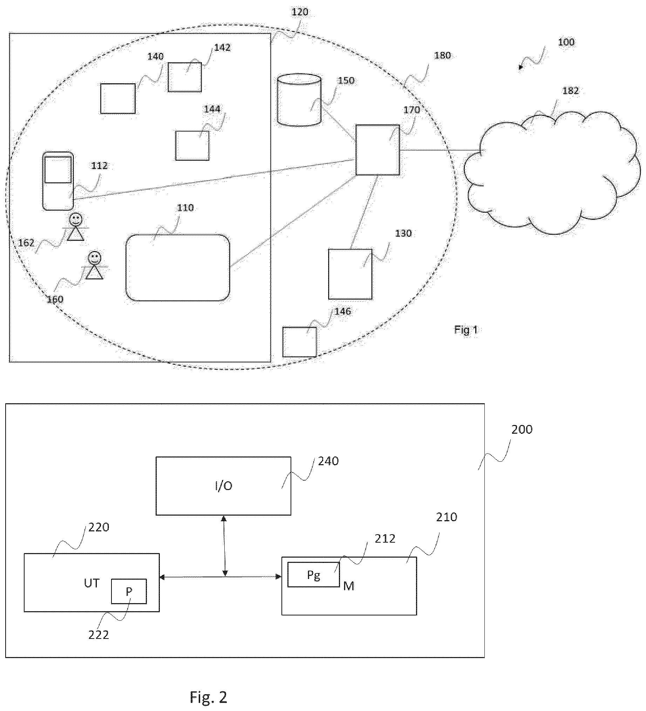

On décrit à présent, en lien avec la figure 1, de façon plus détaillée la présente demande.

La figure 1 représente un système de télécommunication 100 dans lequel certains modes de réalisation de l'invention peuvent être mis en œuvre. Le système 100 comporte un ou plusieurs dispositifs électroniques, certains au moins pouvant communiquer entre eux via un ou plusieurs réseaux de communication 180, 182, éventuellement interconnectés (via par exemple un dispositif d'interconnexion 170 (aussi appelé passerelle ou « gateway » selon la terminologie anglaise), comme un réseau local ou LAN (Local Area Network) et/ou un réseau de type étendu, ou WAN (Wide Area Network). Des exemples de réseau peuvent comprendre un réseau LAN d'entreprise ou domestique et/ou un réseau WAN de type internet, ou cellulaire, GSM - Global System for Mobile Communications, UMTS - Universal Mobile Telecommunications System, Wifi - Wireless, etc.

Comme illustré en figure 1, le système 100 peut également comprendre un ou plusieurs dispositifs électroniques, comme un terminal 110, 112, (tel qu'un ordinateur portable, un smartphone, et/ou une tablette), un casque de réalité augmentée, mixte ou virtuelle, un objet connecté 140, et/ou un serveur 130, par exemple un serveur d'applications, un dispositif de stockage 150. Le système peut également comprendre des éléments de gestion et/ou d'interconnexion réseau (non représentés) .Ces dispositifs électroniques peuvent être associés à au moins un utilisateur 160, 162 (par le biais par exemple d'un compte utilisateur accessible par login), certains des dispositifs électroniques 110, 112 pouvant être associés à un même utilisateur 160 ou partagés par plusieurs utilisateurs 160, 162.

Dans la présente demande, on appelle objet connecté (ou "objet intelligent" (Smart object selon la terminologie anglaise) un dispositif électronique ayant des composants (matériel ou logiciel) lui donnant une capacité à accomplir une fonction (action, fourniture d'un service, acquisition d'informations sur son environnement physique; etc..), des moyens (comme un microcontrôleur) permettant de piloter ces composants pour l'accomplissement de cette fonction, et des moyens de communication au sein d'un réseau de communication permettant notamment d'obtenir et/ou de fournir de l'information en lien avec l'accomplissement de la fonction. Par exemple, un objet connecté peut acquérir une information relative à son environnement physique courant et la transmettre sur le réseau, ou recevoir du réseau de communication une commande pour effectuer une action.

**Certains** des dispositifs du système 100 peuvent traiter (par exemple créer et/ou stocker et/ou modifier et/ou manipuler et/ou supprimer) des informations relatives à un environnement physique 120 où sont présents un ou plusieurs objets 140, 142. Certains 140 de ces objets peuvent être des objets connectés appartenant au système 100 (donc des « dispositifs » du système 100), d'autres objets 142 pouvant être des objets « non connectés » ne comportant pas de moyens de communication. On note que la notion d'objet inclue ici non pas seulement des structures inertes mais également des structures vivantes, comme des arbres, animaux ou individus.

Les informations relatives à l'environnement physique peuvent être représentatives d'un état courant (actuel) de l'environnement physique et/ou d'un état, d'une activité ou d'un positionnement (localisation, orientation, mobilité etc..) d'au moins certains des objets (connectés ou non) qu'il contient ou qui sont situés à proximité de cet environnement physique.

Par exemple, certaines informations peuvent être relatives à des objets 146 non présents dans l'environnement physique mais ayant une incidence sur cet environnement physique.

Dans la présente demande, on désignera par le terme « jumeau numérique » d'un objet réel une modélisation de cet objet réel par un ensemble d'information(s) relative(s) à cet objet réel. Ces informations peuvent en particulier être représentatives de son état courant, et/ou de ses liens ou interactions avec d'autres objets. Similairement, on désignera par le terme « jumeau numérique » d'un environnement physique comprenant au moins un objet réel, une modélisation de cet environnement physique par un ensemble d'information(s) relative(s) à l'environnement physique dans sa globalité, et/ou à au moins certains des objet réels qu'il contient et/ou à leurs interactions. Ainsi, un jumeau numérique est une représentation numérique, à un instant courant, de l'objet ou de l'environnement physique auquel il est associé. De la même façon que l'environnement physique peut inclure, ou contenir, un ou plusieurs objets, le jumeau numérique de l'environnement physique peut inclure des jumeaux numériques d'objets de l'environnement physique auquel il correspond, ou avoir accès, au moins partiellement, aux jumeaux numériques des objets de l'environnement physique.

Le jumeau numérique peut donc évoluer au fil des évolutions de l'objet ou de l'environnement physique qu'il représente.

On note que les informations relatives à un objet réel peuvent être acquises via l'objet réel lui-même (s'il possède des moyens de communication avec au moins un autre dispositif du système 100) ou via un autre objet ou dispositif (tel que par exemple une caméra externe à cet objet mais ayant cet objet dans son champ de vision et pouvant donc transmettre des informations relatives à un état ou à un mouvement de cet objet).

Un jumeau numérique peut selon un autre exemple être alimenté périodiquement ou au fil de l'eau par des données collectées via des capteurs disposés sur, et/ou dans, et/ou à proximité de, l'objet réel ou de l'environnement physique, ou par des données issues d'une inspection par un opérateur, à au moins un certain instant, de cet objet.

Des exemples de capteurs incluent des microphones, des capteurs de mouvement, capteurs de pression, des dispositifs de suivi du regard (« eye-tracking » selon la terminologie anglaise), des caméras (comme des caméra multi capteurs capables de produire une représentation en 3D (en fil de fer par exemple) d'un objet réel de l'environnement physique et de détecter et localiser des objets réels dans l'environnement physique).

Dans certains modes de réalisation, un jumeau numérique peut être obtenu et/ou enrichi par cartographie (via une reconnaissance spatiale par exemple)

Ainsi, à la différence d'une modélisation numérique classique, un jumeau numérique est configuré pour fournir, à tout instant, des informations sur l'état courant de fonctionnement de l'objet ou de l'environnement physique auquel il est relié.

La figure 2 illustre une structure simplifiée d'un dispositif électronique 200 du système 100, par exemple le dispositif 110, 112, 130 ou 140 de la figure 1, adapté à mettre en oeuvre les principes de la présente demande. Selon les modes de réalisation, il peut s'agir d'un serveur, et/ou d'un terminal.

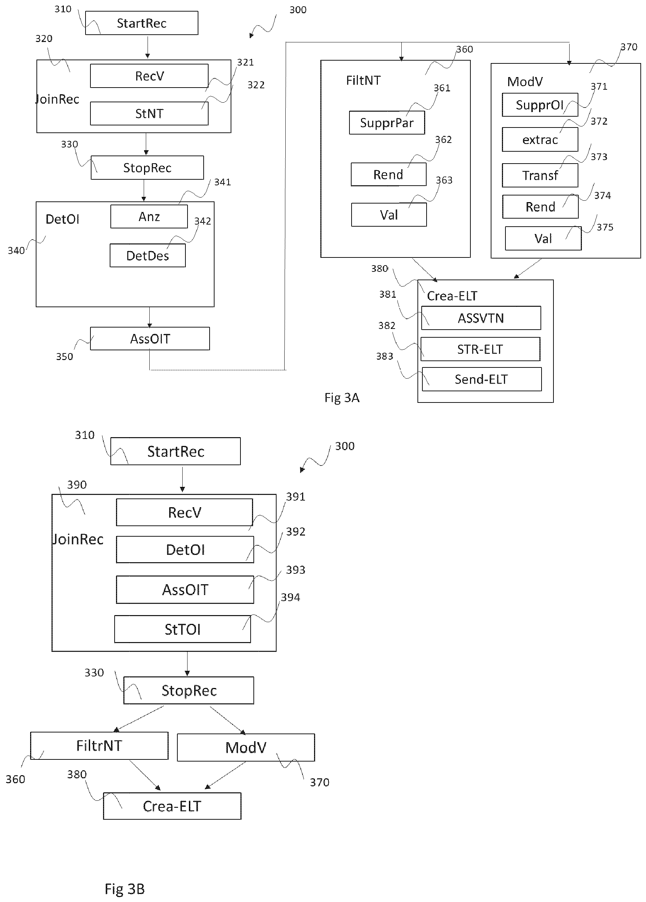

Le dispositif 200 comprend notamment au moins une mémoire M 210. Le dispositif 200 peut notamment comprendre une mémoire tampon, une mémoire volatile, par exemple de type RAM (pour « Random Access Memory » selon la terminologie anglaise), et/ou une mémoire non volatile (par exemple de type ROM (pour « Read Only Memory » selon la terminologie anglaise). Le dispositif 200 peut également comprendre une unité de traitement UT 220, équipée par exemple d'au moins un processeur P 222, et pilotée par un programme d'ordinateur PG 212 stocké en mémoire M 210. A l'initialisation, les instructions de code du programme d'ordinateur PG sont par exemple chargées dans une mémoire RAM avant d'être exécutées par le processeur P. Ledit au moins un processeur P 222 de l'unité de traitement UT 220 peut notamment mettre en œuvre, individuellement ou collectivement, l'un quelconque de modes de réalisation d'au moins un des procédés d'obtention et/ou de rendu enrichi de la présente demande (décrit notamment en relation avec les figures 3A, 3B, 4 et 5), selon les instructions du programme d'ordinateur PG.

Le dispositif peut également comporter, ou être couplé à, au moins un module d'entrée/ sortie I/O 230, tel qu'un module de communication, permettant par exemple au dispositif 200 de communiquer avec d'autres dispositifs du système 100, via des interfaces de communication filaires ou sans fils, et/ou tel qu'un module d'interfaçage avec un utilisateur du dispositif (aussi appelé plus simplement dans cette demande « interface utilisateur »).

Par interface utilisateur du dispositif, on entend par exemple une interface intégrée au dispositif 200, ou une partie d'un dispositif tiers couplé à ce dispositif par des moyens de communication filaires ou sans fils. Par exemple, il peut s'agir d'un écran secondaire du dispositif, d'une caméra (permettant d'acquisition de commandes gestuelles d'un opérateur par exemple) ou d'un ensemble de hauts parleurs connectés par une technologie sans fils au dispositif.

Une interface utilisateur peut notamment être une interface utilisateur, dite «de sortie», adaptée à un rendu (ou au contrôle d'un rendu) d'un élément de sortie d'une application informatique utilisée par le dispositif 200, par exemple une application s'exécutant au moins partiellement sur le dispositif 200 ou une application « en ligne » s'exécutant au moins partiellement à distance, par exemple sur le serveur 140 du système 100. Des exemples d'interface utilisateur de sortie du dispositif incluent un ou plusieurs écrans, notamment au moins un écran graphique (tactile par exemple), un ou plusieurs haut-parleurs, un casque connecté (notamment un casque de réalité augmentée, mixte ou virtuelle).

Par rendu, on entend ici une restitution (ou « output » selon la terminologie anglaise) sur au moins une interface utilisateur, sous une forme quelconque, par exemple comprenant des composantes textuelle, audio et/ou vidéo, ou une combinaison de telles composantes.

Par ailleurs, une interface utilisateur peut être une interface utilisateur, dite «d'entrée», adaptée à une acquisition d'une commande d'un utilisateur du dispositif 200. Il peut s'agir notamment d'une action à effectuer en lien avec un item rendu par le dispositif 200, et/ou d'une commande à transmettre à une application informatique utilisée par le dispositif 200, par exemple une application s'exécutant au moins partiellement sur le dispositif 200 ou une application « en ligne » s'exécutant au moins partiellement à distance, par exemple sur le serveur 140 du système 100. Des exemples d'interface utilisateur d'entrée du dispositif 200 incluent un capteur, un moyen d'acquisition audio et/ou vidéo (par exemple un microphone, une caméra (webcam), un dispositif de suivi oculaire (« eye-tracking » selon la terminologie anglaise)), un moyen d'acquisition d'une commande (touche (s), par exemple un clavier, bouton, une souris, actionneur d'un écran tactile) etc.

Ledit au moins un microprocesseur du dispositif 200 peut notamment être adapté pour mettre en oeuvre au moins l'un des procédés de la présente demande.

Ainsi, ledit au moins un microprocesseur du dispositif 200 peut notamment être adapté pour une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel.

Ainsi, ledit au moins un microprocesseur du dispositif 200 peut notamment être adapté
pour une obtention d'un élément multimédia, ladite obtention comprenant :
une obtention d'un flux audiovisuel représentant au moins une portion d'un environnement physique ;
une création d'un élément multimédia donnant accès à au moins une valeur d'au moins un premier paramètre d'un jumeau numérique relatif à au moins un premier objet d'intérêt dudit flux audiovisuel, ladite valeur étant extraite dudit jumeau numérique lors d'une captation dudit flux audiovisuel.

Ainsi, ledit au moins un microprocesseur du dispositif 200 peut notamment être adapté pour un rendu enrichi d'au moins un premier objet d'intérêt d'un environnement physique, une mise en oeuvre dudit rendu enrichi comprenant:
une obtention d'un élément multimédia, ledit élément multimédia donnant accès à au moins une première valeur d'au moins un premier paramètre d'un jumeau numérique relatif au moins audit premier objet d'intérêt ;
une obtention d'au moins une première représentation audiovisuelle d'au moins une première portion dudit jumeau numérique tenant compte de ladite première valeur obtenue ;
un rendu de ladite première représentation audiovisuelle dans ledit environnement physique. Ainsi, ledit au moins un microprocesseur du dispositif 200 peut notamment être adapté pour: une obtention d'un élément multimédia donnant accès à au moins un contenu audiovisuel relatif au moins à un premier objet physique d'intérêt et à au moins une première valeur d'au moins un premier paramètre d'un jumeau numérique, ladite première valeur étant obtenue lors d'une captation d'un flux audiovisuel, ledit contenu audiovisuel étant obtenu à partir dudit flux audiovisuel, et ledit jumeau numérique étant relatif au moins audit premier objet physique d'intérêt ;
une obtention d'au moins une première représentation audiovisuelle d'au moins une première portion dudit premier objet physique d'intérêt tenant compte de ladite première valeur obtenue dudit paramètre dudit jumeau numérique;
un rendu conjoint de ladite première représentation audiovisuelle et d'au moins une partie dudit contenu audiovisuel.

On note que dans certains modes de réalisation, le dispositif peut être adapté à la fois à la mise en œuvre du procédé d'obtention et du procédé de rendu enrichi de la présente demande. Dans d'autres modes de réalisation, au contraire, l'obtention de l'élément multimédia et le rendu enrichi peuvent être mis en œuvre par des dispositifs différents.

Certains des modules d'entrée -sorties ci-dessus sont optionnels et peuvent donc être absents du dispositif 200 dans certains modes de réalisation. Notamment, si la présente demande est parfois détaillée en lien avec un dispositif communiquant avec au moins un second dispositif du système 100, l'un au moins un des procédés d'obtention et/ou de rendu peut également être mis en œuvre localement par un dispositif (par exemple lorsque le jumeau numérique de l'environnement physique est local au dispositif et que celui-ci met en œuvre localement à la fois le procédé d'obtention et le procédé de rendu enrichi de la présente demande (à des instants différents par exemple).

Au contraire, dans certains de ses modes de réalisation, l'au moins un des procédés d'obtention et/ou de rendu peut être mis en œuvre de façon distribuée entre au moins deux dispositifs 110, 112, 130, 140, 150, 170 du système 100.

Par le terme « module » ou le terme « composant » ou «élément » du dispositif, on entend ici un élément matériel, notamment câblé, ou un élément logiciel, ou une combinaison d'au moins un élément matériel et d'au moins un élément logiciel. Les procédés selon l'invention peuvent donc être mis en œuvre de diverses manières, notamment sous forme câblée et/ou sous forme logicielle.

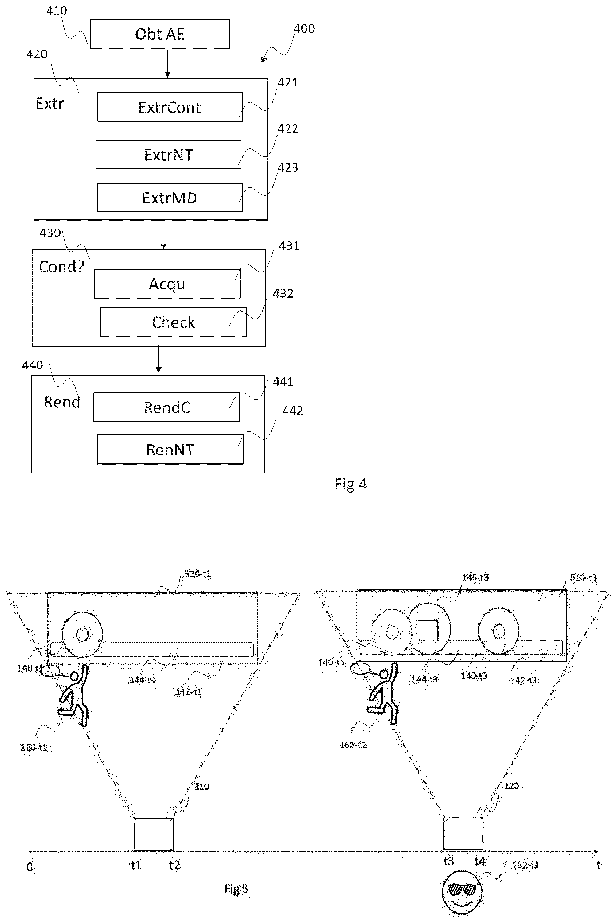

On présente à présent plus en détail certains modes de réalisation du procédé d'obtention 300 de la présente demande. Certains modes de de réalisation sont présentés en liaison avec les figures 3A et 5. D'autres modes de réalisation sont présentés en liaison avec les figures 3B et 5. Une même numérotation est utilisée dans les figures 3A et 3B pour désigner des éléments identiques ou similaires. Le procédé 300 des figures 3A et/ou 3B peut par exemple être implémenté par le dispositif électronique 200 illustré en figure 2.

Certains modes de réalisation du procédé de rendu de la présente demande sont ensuite détaillés en liaison avec les figures 4 et 5. Le procédé de rendu, dans les modes de réalisation détaillés en lien avec les figures 4 et 5 peut notamment être utilisé pour traiter des éléments issus du procédé d'obtention des figures 3A et 5 ou des figures 3B et 5.

La figure 5 illustre, de façon simplifiée, un exemple de mise en œuvre des procédés d'obtention et de rendu à des instants différents.

Comme le montre la figure 3A, le procédé 300 peut comprendre (étape 320) des enregistrements conjoints 321, 322 synchronisés temporellement d'un contenu audiovisuel (enregistrement 321) obtenu à partir d'un flux audiovisuel capturant une scène (audio et/ou vidéo) d'un environnement physique, et d'informations d'au moins un jumeau numérique (enregistrement 322), dans son état courant (ie lors de la capture du flux). Ces informations sont notamment relatives à au moins un objet physique présent dans, ou à proximité de, la scène captée.

Dans l'exemple de la figure 5, un enregistrement 321 représentant notamment un premier interlocuteur 160 est déclenché à l'instant t1. Dans l'exemple illustré, cet enregistrement 321 correspond à une acquisition d'une séquence vidéo (ou en variante d'une pluralité d'images) captant la scène 510-t1. Cette scène se déroule dans une portion d'un environnement physique (comme l'environnement physique 120 de la figure 1). La portion d'environnement comprend plusieurs objets (140, 142 , 144, 160) dont les positions respectives (140-t1, 142-t1, 144-t1, 160-t1) à l'instant t1 sont illustrées en figure 5. Ainsi l'interlocuteur 160 est lui-même un objet d'intérêt dans cet exemple.

Dans l'exemple de la figure 5, l'enregistrement représentant notamment l'interlocuteur 160 et l'enregistrement des paramètres du jumeau numérique de l'environnement s'arrêtent tous deux à un instant t2.

Au moins certaines informations relatives à la captation de la scène (comme une localisation (position, orientation, largeur de champs, etc.) de la captation) peuvent être enregistrées (sauvegardées) en association avec la séquence vidéo .

Par ailleurs, au moins certaines informations du jumeau numérique de l'environnement physique sont enregistrées (mémorisées) en parallèle à l'enregistrement de la séquence vidéo. Ces informations peuvent par exemple se rapporter à des objets présents dans la scène captée (comme les objets 140, 142, 144, 160).

Comme illustré en figure 3A, dans certains modes de réalisation, une même commande 310 peut déclencher à la fois l'enregistrement 321 du contenu audiovisuel et l'enregistrement 322 de paramètres du jumeau numérique de l'environnement). Similairement, une même commande 330 peut déclencher à la fois l'arrêt de l'enregistrement du contenu audiovisuel et de celui des paramètres du jumeau numérique.

Dans d'autres modes de réalisation, des commandes distinctes peuvent commander chacun des enregistrements.

Une commande de début ou de fin (arrêt) d'enregistrement peut par exemple être reçue via une interface d'entrée du dispositif 200 (par exemple via un actionnement d'un élément physique du dispositif tel qu'un bouton physique) ou via une interface de communication du dispositif 200 (cas par exemple d'une commande provenant du téléphone ou d'un casque de l'utilisateur « producteur » et reçue via une interface de communication sans fil du dispositif 200).

Par souci de simplicité, on a considéré en figure 5 qu'entre les instants t1 et t2 les objets 140, 142, 144 et 160 n'avaient pas bougé. Bien entendu, dans certains modes de réalisation, au moins certains des objets d'intérêt (ou d'autres éléments de la scène captée) (notamment l'interlocuteur 160 dans notre exemple) peuvent être en mouvement durant l'enregistrement. Dans certains modes de réalisation, l'origine, la direction et/ou l'angle de la prise de vue peut également fluctuer pendant l'enregistrement (balayage d'une scène ou zoom sur un interlocuteur par exemple).

Selon les modes de réalisation, l'enregistrement 332 des paramètres du jumeau numérique peut être effectué à intervalles réguliers pendant l'enregistrement du contenu audiovisuel, et/ou lors d'évènements particuliers (début et/ou fin d'enregistrement, changement d'état d'un paramètre (fluctuation de sa valeur), tel qu'un statut et/ou une position, survenue d'un évènement inattendu (alerte intrusion, et/ou incendie, et/ou panne d'un équipement de l'environnement physique, etc.). Un enregistrement à plusieurs reprises d'un paramètre d'un objet d'intérêt peut aider à mettre en évidence un changement d'état et/ou un mouvement et/ou une modification, et/ou une altération d'un objet d'intérêt pendant sa captation. Enregistrer la valeur d'un paramètre du jumeau numérique uniquement lors de sa fluctuation peut aider à limiter l'occupation mémoire de l'enregistrement du jumeau numérique, ce qui peut s'avérer important dans certains modes de réalisation, par exemple dans certains modes de réalisation où le jumeau numérique est très complexe (donc dont les mises à jour requièrent par exemple des temps de traitement important(s)), et/ou où l'élément multimédia doit être généré très rapidement (suite à la survenue d'un évènement critique par exemple), et/ou où le procédé d'obtention s'exécute sur un dispositif ayant des capacités mémoire et/ou de traitement très limitées).

Dans certains modes de réalisation où l'élément multimédia comprend une (ou plusieurs) composante vidéo, l'enregistrement 321 du contenu audiovisuel peut limiter l'enregistrement à une zone de la scène située à proximité d'un point de référence (par exemple un objet d'intérêt tel qu'un interlocuteur présent dans la scène). Par exemple, la zone enregistrée peut être une zone circulaire ou rectangulaire centrée sur l'interlocuteur dont le rayon, respectivement la largeur/hauteur, est une constante correspondant à une distance « maximale » (utilisée comme seuil) de l'interlocuteur. L'enregistrement du contenu audiovisuel peut comprendre également un enregistrement d'au moins une métadonnée en lien avec le flux audiovisuel capté (comme une horodate de début et/ou de fin d'enregistrement, les liens avec certains éléments du jumeau numérique, les coordonnées en 3D ou les états des éléments dans l'espace au moment de l'enregistrement, des caractéristiques du dispositif ayant capté le contenu audiovisuel, un type d'encodage du contenu audiovisuel ,etc.).

Dans l'exemple de la figure 3A, le procédé peut comprendre un enregistrement 332 de l'ensemble des paramètres du jumeau numérique puis un filtrage 360 des paramètres du jumeau numérique enregistrés, pour ne conserver que certains de ces paramètres, en tenant compte du contenu audiovisuel enregistré (et éventuellement filtré 371 également). Ces filtrages de paramètre(s) enregistré(s) comme du contenu audiovisuel enregistré peuvent être optionnels dans certains modes de réalisation. Ils sont détaillés plus précisément ci-après. Dans certains modes de réalisation, le procédé peut comprendre une détection 340 d'au moins un objet d'intérêt dans le contenu audiovisuel enregistré. Cette détection 340 peut mettre en oeuvre une analyse 341 du contenu audiovisuel, via par exemple des techniques de traitement d'image et/ou de traitement audio. Par exemple, l'analyse 341 peut comprendre un traitement d'image (analyse de mouvements par exemple) pour détecter 342 une désignation gestuelle, vocable ou visuelle (par un regard par exemple), par un interlocuteur (présent dans au moins une scène captée), d'au moins une région de la scène acquise. Un traitement d'image plus fin (détection de forme par exemple) peut de plus être effectué sur la région désignée pour y détecter un ou plusieurs objets (constituant potentiellement un ou plusieurs objets d'intérêt). De façon cumulative ou alternative, l'analyse 341 peut comprendre une analyse audio pour détecter 342 dans un discours de l'interlocuteur un ou plusieurs mots clés correspondant sémantiquement à des objets détectés (par un traitement d'image) dans la scène acquise. L'interlocuteur lui-même peut constituer potentiellement un objet d'intérêt.

Cette analyse peut par exemple aboutir à une détermination (ou détection) d'au moins un objet(s) d'intérêt(s) dans le flux audiovisuel enregistré. Il peut aussi s'agir, dans certains modes de réalisation, de détecter dans la scène acquise (via une reconnaissance de forme par exemple) au moins un objet particulier assimilé (par exemple par une configuration préalable) comme présentant un intérêt pour l'interlocuteur et/ou pour un consommateur potentiel de la séquence vidéo. Il peut s'agir par exemple d'un objet critique (au point de vue de son fonctionnement et/ou du fait de sa dangerosité), et/ou d'un objet occupant une part importante de la scène captée, d'un objet en mouvement ou bruyant dans la scène captée et/ou dans une zone dangereuse à ne pas franchir et/ou à ne pas dépasser pour les personnes qui n'ont pas l'habilitation, etc. Il peut aussi s'agir de portions d'un objet d'intérêt plus particulièrement susceptibles de désigner et/ou d'interagir entre un autre objet d'intérêt de la scène (comme par exemple dans le cas où un des objets d'intérêt est un interlocuteur présent dans la scène, ses mains, ses jambes, ses yeux, ..), qu'il s'agit donc de suivre (traquer) avec précision (par exemple pour détecter d'autres objets d'intérêt comme expliqué ci-dessus). Par exemple, ces portions de l'objet d'intérêt davantage susceptible de désigner et/ou d'interagir entre un autre objet d'intérêt de la scène peuvent être suivies avec plus de précisions que d'autres portions de l'objet d'intérêt.

Une fois au moins un objet d'intérêt détecté, le procédé peut comprendre une mise en correspondance 350 de l'objet d'intérêt détecté dans le flux avec au moins une information (paramètre) du jumeau numérique enregistrée (enregistrement 322).

L'objet d'intérêt peut être un objet connecté 140 ayant son propre jumeau numérique, ou un objet connecté 140 auquel est relatif au moins un paramètre du jumeau numérique d'au moins une portion de l'environnement. Les paramètres correspondant à l'objet dans le jumeau numérique peuvent comprendre son identifiant, et/ou des descripteurs de cet objet comme sa position (localisation et orientation), ses dimensions, sa forme, sa couleur, son état, son mouvement (vitesse, accélération, direction, rotation, etc.). L'objet d'intérêt peut être aussi un objet non connecté 142, auquel cas une estimation de certains paramètres le décrivant (par exemple sa position par rapport à des objets connectés du jumeau numérique) peut être extraite de la scène acquise.

Les paramètres enregistrés du jumeau numérique peuvent correspondre non seulement à des objets d'intérêt de la scène captée mais également à des objets (comme des objets 146 situés à proximité de la scène captée) représentés dans le jumeau numérique et/ou ayant une incidence sur la scène captée, comme des objets à l'origine d'une source de lumière ou de bruit dans la scène captée.

Comme illustré en figure 3A, le procédé 300 peut comprendre un filtrage 360 d'au moins un paramètre enregistré du jumeau numérique. Le filtrage 360 peut comprendre une suppression 361 d'au moins un paramètre enregistré du jumeau numérique. Par exemple, il peut s'agir de supprimer au moins un paramètre enregistré ne correspondant à aucun objet d'intérêt du contenu, ou correspondant à un objet déclaré préalablement (par paramétrage par exemple) comme sans intérêt (comme un balai ou des copeaux dans un environnement industriel par exemple) .

Il peut aussi s'agir de sélectionner les objets d'intérêt à conserver en fonction de leur position (ou leur orientation) par rapport à une position de référence (ou une orientation de référence). Par exemple, dans le cas d'une séquence vidéo, le procédé peut comprendre un filtrage des paramètres enregistrés du jumeau numérique pour ne conserver que ceux relatifs à des objets d'intérêt situés à proximité d'un objet de référence présent dans la vidéo (dont la position est considérée comme une position de référence). Cet objet de référence peut par exemple être un interlocuteur délivrant un message audio et/ou gestuel dans le contenu audiovisuel. Par exemple, tous les paramètres du jumeau numérique relatifs à des objets d'intérêt situés à une distance supérieure à une première distance de cet objet (par exemple une distance constante fixée par paramétrage) peuvent être supprimés.

Dans le cas d'une séquence vidéo, dans des modes de réalisation où la position et/ou l'orientation d'un interlocuteur est utilisée comme référence, et où celui-ci se déplace, tous les paramètres du jumeau numérique relatifs à des objets situés, à un instant de la séquence, à proximité de l'interlocuteur peuvent par exemple être conservés.

Comme illustré en figure 3A, le procédé peut comprendre une modification 370 du contenu audiovisuel. Cette modification peut être optionnelle dans certains modes de réalisation. La modification peut par exemple comprendre un filtrage 371 du contenu pour supprimer certaines portions (temporelles et/ou spatiales) et/ou au moins une composante (audio, visuelle etc...) du contenu audiovisuel de façon à ne conserver par exemple que des portions d'image représentant un objet d'intérêt, et/ou qu'une portion d'une séquence audio de l'interlocuteur relative à un objet d'intérêt, et/ou qu'une composante audio et/ou qu'une composante visuelle.

La modification 370 peut aussi comprendre dans certains modes de réalisation l'obtention d'un contenu audiovisuel modifié correspondant à une extraction 372 d'une portion (à conserver dans ce contenu modifié) du contenu capté (par exemple une extraction d'une silhouette par «détourage» de la silhouette dans la scène captée).

La modification peut comprendre (en complément ou alternativement) une transformation 373 d'une portion du contenu. Par exemple, après détourage d'une silhouette d'un personnage dans le contenu audiovisuel, celle-ci peut être remplacée par un avatar de ce personnage, ou un hologramme de ce personnage. L'avatar peut notamment être corrélé au personnage capté, à ses mouvements et ses expressions.

Des données connexes peuvent également être sauvegardées en association avec le contenu (éventuellement modifié) , par exemple sous forme de métadonnées. Des exemples de telles données peuvent inclure un identifiant d'un objet (ou portion d'objet) présent dans le contenu audiovisuel (éventuellement modifié), des informations caractérisant la captation, des informations de positionnement d'un objet du contenu modifié etc. On note qu'il peut s'agir d'informations de positionnement absolu (par exemple une position GPS) ou relatif (par exemple une distance et/ou une orientation par rapport à un objet du jumeau numérique). En particulier, pour un personnage, les informations de positionnement peuvent inclure des informations relatives à la position et/ou au mouvement de certaines parties du corps du personnage (comme au moins un de ses membres (mains, bras, jambes, pieds, etc.), sa tête, sa bouche, ses yeux, son expression faciale, etc.

Dans certains modes de réalisation, le contenu audiovisuel capté peut être un contenu 3D.

Le filtrage du contenu peut être similaire ou conséquent (corrélé) au filtrage des paramètres enregistrés du jumeau numérique et vice-versa, le filtrage effectué dans le contenu pouvant avoir pour conséquence un filtrage à effectuer sur les paramètres correspondant du jumeau numérique et vice-versa.

Dans certains modes de réalisation, le filtrage 360 du jumeau numérique peut comprendre un rendu 362 d'au moins certains éléments du jumeau numérique. Similairement, la modification 370 du contenu audiovisuel peut comprendre un rendu 374 d'au moins une portion et/ou d'une composante du contenu audiovisuel..

Ce rendu 362, 374 d'au moins certains éléments du jumeau numérique et/ou d'au moins une portion et/ou d'une composante du contenu audiovisuel peut être effectué avant et/ou après une suppression automatique d'éléments du jumeau numérique et/ou d'au moins une modification d'une portion et/ou d'une composante du contenu audiovisuel (comme exposé ci-dessus (lorsqu'elle existe)). De tels modes de réalisation peuvent permettre d'obtenir une validation 363, 375 par un opérateur (par exemple par l'interlocuteur présent sur le contenu enregistré) des éléments à conserver du jumeau numérique et/ou des portions et/ou composantes à conserver du contenu audiovisuel. En particulier, le procédé peut comprendre une réception (via une interface utilisateur ou une interface de communication), d'une commande de suppression de certains éléments du jumeau numérique et/ou de rajout de certains éléments supprimés, et/ou d'une commande de suppression de certains portions et/ou composante du contenu audiovisuel et/ou de rajout de certaines portions ou composante supprimées.

Ces deux rendus peuvent être optionnels dans certains modes de réalisation. Ces deux rendus peuvent être effectués conjointement ou séparément. La suppression, respectivement le rajout, d'un objet d'intérêt peut en particulier provoquer la suppression, respectivement le rajout, des paramètres du jumeau numérique associé à l'objet d'intérêt.

Le procédé 300 peut également comprendre une création 380 d'un élément multimédia comprenant les éléments enregistrés du jumeau numérique (éventuellement filtrés). L'élément multimédia peut également comprendre le contenu audiovisuel (éventuellement modifié).

Le contenu audiovisuel et les éléments enregistrés du jumeau numérique peuvent en particulier être associés 381 dans l'élément multimédia en tenant compte de leurs instants d'acquisition respectifs de façon à permettre de les synchroniser temporellement. Par exemple, dans des modes de réalisation où les éléments du jumeau numérique et le contenu audiovisuel sont horodatés, l'association peut tenir compte de leurs horodates respectives. Plus précisément, l'association peut tenir compte d'une proximité (par exemple une égalité) entre leurs horodates respectives. L'association 381 peut également tenir compte des objets d'intérêts auxquels ils sont relatifs.

Comme illustré en figure 3A, le procédé peut comprendre également un stockage 382 de l'élément multimédia créé (par exemple pour un rendu ultérieur sur le dispositif mettant en oeuvre le procédé d'obtention, ou pour un rendu depuis un dispositif couplé à celui-ci) et/ou une transmission 383 de cet élément multimédia vers au moins un autre dispositif (par exemple un autre dispositif du système 100 implémentant le procédé de rendu décrit en lien avec les figures 4 et 5).

On note que dans certains modes de réalisation, la transmission 383 de l'élément multimédia peut comprendre une transmission d'au moins une désignation d'au moins un utilisateur destinataire de l'élément multimédia. L'élément multimédia (ou un lien vers un tel élément) peut par exemple être transmis dans un message électronique (via des outils de messagerie électronique divers selon les modes de réalisation) vers au moins un utilisateur destinataire. Cette transmission d'une désignation d'au moins un destinataire peut être optionnelle dans certains modes de réalisation.

Dans certains modes de réalisation, (non illustrés en figure 3A) le filtrage 360 des éléments enregistrés du jumeau numérique (respectivement la modification du contenu 370) peut intervenir après la création de l'élément multimédia. Dans un tel cas, la suppression d'un composant de l'élément multimédia pourra avoir comme conséquence la suppression d'un composant qui lui est associé dans l'élément multimédia.

Certains modes de réalisation ont été présenté ci-avant en liaison avec les figures 3A et 5 . Dans les modes de réalisation illustrés en figure 3A, l'analyse du contenu et la détection d'objets d'intérêts via ce contenu, et donc le filtrage en conséquence du jumeau, sont effectués après la fin de l'enregistrement du contenu (ie après l'instant t2 selon la figure 5). De tels modes de réalisation peuvent permettre de limiter les traitements pendant la phase d'enregistrement du contenu et donc de limiter les pics de charge du processeur du dispositif 200.

On détaille à présent d'autres modes de réalisation en liaison avec les figures 3B et 5.

La figure 3B illustre ainsi une variante des modes de réalisation illustrés en figure 3A. Dans cette variante, notamment, l'enregistrement conjoint 390 diffère de l'enregistrement conjoint 320 de la figure 3A. Ainsi, le contenu audiovisuel est analysé au fil de l'eau, lors de son enregistrement 391 (ie entre les instants t1 et t2 selon la figure 5), pour détecter 392 des objets d'intérêt, mettre en correspondance 393 des informations du jumeau numérique relatives à ces objets d'intérêt et enregistrer 394 ces informations au fil de l'eau. La détection 392 et la mise en correspondance 393 peuvent être similaires à celles de la détection 341 et de la mise en correspondance 350 décrites en lien avec la figure 3A.

Des modes de réalisation tels qu'illustrés en figure 3B peuvent aider à limiter la quantité d'informations issues du jumeau numérique enregistrée et donc permettre de limiter la taille mémoire nécessaire à la mise en oeuvre du procédé d'obtention.

Comme exposé en lien avec la figure 3A, l'enregistrement 394 des paramètres du jumeau numérique peut être effectué à intervalles réguliers pendant l'enregistrement du contenu audiovisuel, et/ou lors d'évènements particuliers (début et/ou fin d'enregistrement, et/ou fluctuation d'un paramètre, et/ou survenue d'un évènement inattendu par exemple). De tels modes peuvent aider à limiter la taille de l'élément multimédia créé.

Les commande de début et de fin d'enregistrement 310, 330 peuvent être similaires à celles décrites en figure 3A.

Dans le mode de réalisation illustré en figure 3B, une modification 370 du contenu vidéo acquis et/ou un filtrage 360 des informations issues du jumeau numérique peut également être effectué une fois l'enregistrement terminé. Selon les modes de réalisation, ce filtrage peut être identique ou différent du filtrage des modes de réalisation de la figure 3A. En particulier, les informations représentatives du jumeau numérique enregistrées étant uniquement relatives aux objets d'intérêts du contenu vidéo enregistré, il peut être optionnel de filtrer davantage les informations du jumeau numérique enregistrées. Optionnellement, un rendu et une validation par un opérateur peuvent être mis en œuvre de façon similaire à ce qui a été décrit en relation avec la figure 3A.

La création de l'élément multimédia 380 peut également être similaire à celle décrite en lien avec la figure 3A.

On a détaillé ci-avant l'enregistrement d'un contenu audiovisuel capté dans le monde réel. En variante, il peut s'agir d'une captation d'une scène d'un environnement virtuel, l'interlocuteur étant dans ce cas non pas un interlocuteur humain mais un avatar présent dans l'environnement virtuel dont est issue la scène.

La figure 4 illustre certains modes de réalisation du procédé de rendu 400 de la présente demande. Le procédé 400 peut par exemple être implémenté par un dispositif électronique tel le dispositif 200 illustré en figure 2. Dans la suite de la description, par simplicité, on parle de « dispositif de rendu » relativement au dispositif implémentant le procédé 400 de rendu, même si le dispositif implémentant (au moins partiellement) le procédé 400 de rendu (et commandant le rendu) et le dispositif réalisant le rendu effectif peuvent être différents. En effet, comme décrit précédemment en lien avec la figure 2, le dispositif mettant en œuvre le procédé de rendu peut être couplé à un autre dispositif effectuant le rendu (comme un écran secondaire).On parlera dans la suite de la demande d' « environnement de rendu » pour désigner l'environnement physique du dispositif effectuant le rendu (et aussi par simplicité, comme expliqué ci-dessus, pour désigner l'environnement physique du dispositif dans lequel est implémenté le procédé de rendu).

Comme illustré en figure 4, le procédé 400 peut comprendre une obtention 410 d'au moins un élément multimédia. Par exemple, il peut s'agir d'une réception de cet élément multimédia via une interface de communication du dispositif de rendu ou d'un accès en lecture à une zone de stockage, local ou distante, de cet élément multimédia, comme une base de données (par exemple l'élément 150 de la figure 1), telle qu'une base de données commune à plusieurs dispositifs du système 100). L'élément multimédia (ou un lien vers un tel élément) peut par exemple être inclus dans un message électronique reçu par un utilisateur du dispositif de rendu. Comme illustré, le procédé peut comprendre une extraction 420 de données de (et/ou à partir de) l'élément multimédia obtenu.

Par exemple, l'extraction 420 peut comprendre une extraction 422 (de et/ou à partir de l'élément multimédia ) d'informations d'un jumeau numérique, au moins certaines de ces informations étant relatives à au moins un objet d'intérêt d'un environnement physique. Les informations relatives à un objet d'intérêt peuvent notamment comprendre un identifiant de l'objet d'intérêt. Selon les modes de réalisation, l'environnement physique auquel se réfère l'élément multimédia peut être l'environnement de rendu ou un autre environnement.

Par exemple, dans certains modes de réalisation, le procédé de rendu pour être mis en œuvre pour restituer (rendre) un élément multimédia représentant et/ou donnant accès à des informations (à un instant précédent l'instant courant) d'un jumeau numérique d'au moins un objet d'intérêt situé dans l'environnement de rendu, et donnant accès optionnellement à un contenu audiovisuel acquis (à cet instant précédent) au même endroit.

Dans certains modes de réalisation, le procédé de rendu pour être mis en œuvre pour restituer (rendre) un élément multimédia reçu d'un tiers et représentant des informations (à un instant précédent l'instant courant) d'un jumeau numérique d'au moins un objet d'intérêt situé dans un environnement physique distant de l'environnement de rendu. De tels modes de réalisation peuvent par exemple s'appliquer pour une transmission d'un rapport (dont cet élément multimédia) d'un opérateur à un superviseur distant, ou encore pour une transmission d'instructions (dont cet élément multimédia) d'un formateur vers un opérateur (devant appliquer ces instructions dans un environnement de rendu proche de l'environnement physique de captation des instructions (cas d'usines jumelles par exemple).

Optionnellement, l'extraction 420 peut comprendre une extraction 421 de (et/ou à partir de) l'élément multimédia d'un contenu audiovisuel et/ou une extraction 423 d'autres informations complémentaires, par exemple en lien avec le contenu, comme des métadonnées associées au contenu et décrivant par exemple le contexte de prise de vue du contenu, et/ou au moins un identifiant et/ou une information de positionnement, dans le contenu, de l'objet d'intérêt de l'environnement physique.

Certaines de ces données (notamment le contenu audiovisuel lui-même et au moins certaines de ses métadonnées) peuvent être optionnelles dans certains modes de réalisation. Des modes de réalisation où l'élément multimédia ne contient pas de contenu audiovisuel peuvent permettre de limiter la taille de l'élément multimédia et en conséquence de limiter le temps de traitement associé, ce qui peut contribuer à obtenir un rendu d'informations du jumeau numérique plus fluide que lorsque, conjointement à leur rendu, un rendu d'un contenu audiovisuel (par exemple vidéo) est effectué.

Les informations complémentaires peuvent par exemple permettre d'associer des informations du jumeau numérique extraites de l'élément multimédia avec un objet d'intérêt présent dans le contenu. Elles peuvent également permettre, selon un autre exemple où l'environnement de rendu correspond à l'environnement physique auquel se rapporte l'élément multimédia, de déterminer un point de vue (positionnement, et/ou orientation, et/ou largeur de champ, etc.) identique (ou quasi-identique) au point de vue de captation d'une scène de ce contenu (et/ou dont il est issu). L'au moins une information de positionnement peut comprendre par exemple, dans le cas où le contenu audiovisuel a une composant visuelle (comme une séquence vidéo), une désignation d'au moins une image du contenu, ainsi que les coordonnées d'au moins un pixel représentant l'objet d'intérêt dans cette image (par exemple un écart (offset selon la terminologie anglaise) par rapport à un pixel de référence (par exemple le coin en haut à gauche) de cette image).

Dans certains modes de réalisation, le rendu associé à l'élément multimédia (et qui sera décrit ci-après) peut être effectué sur commande d'un utilisateur (par exemple un destinataire d'un message incluant l'élément multimédia (ou un lien vers un tel élément)).

Dans d'autres modes de réalisation, comme illustré en figure 4, le rendu peut être effectué automatiquement. Dans de tels modes de réalisation, il peut être effectué systématiquement sur obtention de l'élément multimédia, ou de façon conditionnelle, lorsque certains critères sont remplis. Certains critères peuvent être relatifs à une validation préalable éventuelle d'un opérateur. Par ailleurs, certains critères peuvent être relatifs à contexte courant du dispositif de rendu . Ainsi, comme illustré en figure 4, dans certains modes de réalisation, le procédé peut comprendre une vérification 430 d'une adéquation du contexte courant du dispositif de rendu au rendu de l'élément multimédia. Plus précisément, la vérification peut comprendre une acquisition 431 de données contextuelles du dispositif de rendu. Il peut s'agir par exemple d'acquérir des données relatives au positionnement du dispositif de rendu (ou d'un dispositif couplé à celui-ci et mettant en oeuvre le rendu effectif), et/ou de détecter une présence éventuelle à proximité du dispositif de rendu (ou d'un dispositif couplé à celui-ci et mettant en oeuvre le rendu effectif), et/ou d'identifier et/ou de reconnaître physiquement cette personne, et/ou d'acquérir une horodate courante. Le procédé peut également comprendre une vérification 432 de critères de rendu en fonction d'au moins certaines des données contextuelles acquises. Par exemple, le rendu peut n'être effectué que lorsqu'au moins un des critères vérifiés (ou tous, selon les modes de réalisation) sont remplis.

Selon un premier exemple, applicable notamment lorsque l'environnement de rendu correspond à l'environnement de captation, l'un des critères à vérifier peut être un point de vue du dispositif de restitution (rendu) identique au point de vue d'un dispositif de captation à l'origine d'au moins une partie de l'élément multimédia.

Selon un second exemple, le rendu peut n'être effectué que lors de la détection d'une présence à proximité du dispositif de rendu (ou d'un dispositif couplé à celui-ci et mettant en oeuvre le rendu effectif). Selon un troisième exemple, applicable notamment lorsque l'environnement de rendu correspond à l'environnement de captation, le rendu peut n'être effectué que lors de la détection d'une présence à proximité de la position courante d'au moins un objet d'intérêt auquel sont relatives au moins certaines des données extraites de l'élément multimédia et/ou à proximité d'une position d'un tel objet, telle qu'extraite de l'élément multimédia (ie dit simplement la position courante de l'objet d'intérêt lors de la captation du flux audiovisuel via lequel il a été détecté).Un critère peut par exemple être une présence du destinataire du message donnant accès à l'élément multimédia, ou d'un individu quelconque, à une distance inférieure à une première distance (comme une valeur constante paramétrée préalablement et utilisée comme valeur seuil) du dispositif de rendu, et/ou d'au moins un objet d'intérêt auquel sont relatives des données extraites de l'élément multimédia et/ou encore d'un point de référence de l'environnement physique (ou virtuel) , comme une portion de l'environnement physique correspondant à la prise de vue du contenu.

Ainsi, dans des modes de réalisation où l'environnement de rendu correspond à l'environnement de captation, le rendu peut être proposé via un message visuel ou vocal à un individu s'approchant d'un endroit correspondant à un positionnement courant d'au moins un des objets d'intérêt du contenu, et/ou à un positionnement d'au moins un des objets d'intérêt du contenu lors de la captation du contenu, et/ou d'un endroit correspondant à la position de la prise de vue lors de l'enregistrement initial du contenu. (ou être effectué automatiquement lors de l'approche de l'individu).

Selon un autre exemple, applicable notamment lorsque l'environnement de rendu correspond à l'environnement de captation, un critère de rendu peut être une présence dans l'environnement physique actuel (courant) d'au moins un objet d'intérêt de l'élément multimédia. Un tel mode de réalisation peut aider à limiter le rendu de messages « obsolètes », occasionnant donc une consommation de ressources CPU inutiles d'une part et d'autre part une perturbation inutile pour un utilisateur consommateur. Dans d'autres modes de réalisation, au contraire, un tel critère peut ne pas s'appliquer, de façon par exemple à aider un utilisateur consommateur à s'apercevoir de la disparation d'un objet de l'environnement physique.

Dans certains modes de réalisation, où au moins un critère est relatif à un individu authentifié, la vérification 432 de critères de rendu peut comprendre une authentification de l'individu dont une présence a été détectée ou requérant un rendu de l'élément multimédia.

On note que dans certains modes de réalisation les critères de rendu applicables au rendu d'informations du jumeau numérique et au rendu du contenu audiovisuel peuvent être différer entre eux.

Comme souligné ci-avant, la vérification 430 d'une adéquation du contexte courant du dispositif de rendu au rendu de l'élément multimédia peut être optionnelle, au moins dans certains modes de réalisation.

Comme illustré en figures 4 et 5, le procédé 400 peut comprendre un rendu 440 d'au moins certaines données de l'élément multimédia (par exemple après vérification de critères de rendu comme exposé ci-avant).

Le rendu peut notamment comprendre un rendu conjoint d'au moins une portion du contenu audiovisuel extrait de l'élément multimédia (rendu 441) et d'au moins une des informations du jumeau numérique extraites de l'élément multimédia (rendu 442) ;

Par exemple, un des objets d'intérêt rendu peut être un interlocuteur (comme l'utilisateur producteur du contenu audiovisuel).

Le rendu d'au moins un objet d'intérêt du contenu peut être également conditionnel. Par exemple, il peut tenir compte de critères de rendu similaires à certains critères à vérifier cités à titre d'exemple ci-avant (voir vérification 432 de critères de rendu). Par exemple, seuls peuvent être rendus les objets d'intérêt dont les informations de positionnement dans l'élément multimédia correspondent à une position à proximité de la position courante d'un utilisateur « consommateur » de l'élément multimédia.

Dans l'exemple de la figure 5, le rendu 440 de l'élément multimédia est effectué entre les instants t3 et t4 en présence de l'utilisateur « consommateur » 162-t3. Le rendu 440 de l'élément multimédia comprend un rendu 441 d'un contenu audiovisuel (une séquence vidéo) 160-t1 extrait de l'élément multimédia et représentant le premier interlocuteur 160 entre les instants t1 et t2. Par exemple, il peut s'agir d'un détourage de l'interlocuteur dans la séquence vidéo captée, ou d'un avatar représentant l'interlocuteur et animé pour tenir compte des mouvements effectués par l'interlocuteur lors de la captation de la séquence vidéo. Selon les figures 4 et 5, un rendu 442 d'au moins certaines informations du jumeau numérique est effectué de façon conjointe (par exemple synchronisée) au rendu de l'interlocuteur 160. Le rendu 442 peut par exemple inclure une représentation audiovisuelle (virtuelle ou réelle) d'au moins un objet d'intérêt 140, 160 (éléments 140-t1, et 160-t1 respectivement). Selon les modes de réalisation, cette représentation visuelle peut correspondre à une extraction d'une portion du contenu audiovisuel capté ou encore à une représentation virtuelle générée à partir des informations du jumeau numérique lors de la captation. On parlera par simplicité ci-après dans les deux cas de représentation visuelle « captée » (ou de rendu d'un objet « tel que capté »)). Dans le cas où le dispositif de rendu est adapté à un rendu de type « réalité augmentée « ou virtuelle », le rendu de ou des objets d'intérêts tels que captés (140-t1, 160-t1) peut par exemple être effectué en « superposition » avec leur rendu/apparence courante 140-t3, 160-t3. Ainsi, l'utilisateur consommateur 162 peut par exemple consommer une scène dans laquelle apparaît l'interlocuteur 160-t1 désignant l'objet d'intérêt 140-t1, la même scène comportant également l'élément d'intérêt 140-t3 dans sa position courante. Le rendu d'un objet d'intérêt (et/ou de sa représentation (graphique ou sonore) peut par exemple donner accès au paramètre du jumeau numérique extraits de l'élément multimédia et concernant cet objet d'intérêt.

Dans des modes de réalisation où le rendu comprend un rendu d'une représentation visuelle au moins partielle du jumeau numérique (dans son état antérieur et/ou courant ), l'utilisateur consommateur peut par exemple ainsi voir in situ les recommandations d'un interlocuteur présent dans le contenu audiovisuel (par exemple 3D) rendu (avatar ou reconstitution plus réaliste de son visage et/ou de son corps). L'utilisateur consommateur peut éventuellement se déplacer dans l'environnement physique (réellement ou de façon virtuelle dans le cas d'une représentation virtuelle de cet environnement physique) à proximité d'un des objets d'intérêt rendus par exemple) pour bien comprendre et voir les éléments importants mentionnés par l'interlocuteur. Ainsi, la présente demande offre des possibilités nouvelles à un utilisateur « consommateur » par rapport à des solutions de l'art antérieur comme des enregistrements vidéo où la position, l'orientation et l'angle de prise de vue de l'enregistrement vidéo sont, lors de leur restitution, uniquement ceux de la captation.

Selon un exemple, les objets d'intérêts en mouvement en lien avec le contenu peuvent apparaissent en 3D au fil de la consommation du contenu. Dans certains modes de réalisation, le rendu d'un objet d'intérêt peut comprendre une mise en évidence (via un indicateur sonore et/ou visuel, tel qu'une surbrillance, une couleur particulière, un texte, etc.) d'une fluctuation d'au moins certaines informations (position, état, etc.) relatives à l'objet d'intérêt. Par exemple, le procédé peut comprendre une comparaison entre l'état actuel de ces objets dans l'environnement réel et leur état lors de la captation et, en cas de fluctuation, les objets concernés pourront être rendus avec une mise en évidence de cette fluctuation, de façon à alerter un utilisateur « consommateur » de cette fluctuation .

L'indication peut être rendue sur l'objet d'intérêt tel que capté et/ou (dans des modes de réalisation où la scène courante est rendue en réalité mixte) sur l'objet d'intérêt dans son « état » courant.

De tels modes de réalisation, qui permettent de mettre en évidence des objets d'intérêts présents dans la scène initiale qui ont été supprimés, ou au contraire qui sont encore présents à l'instant du rendu dans la scène courante, peuvent aider un utilisateur consommateur à juger si l'élément multimédia rendu a un intérêt ou pas dans l'environnement de rendu.

Par ailleurs, de tels modes de réalisation peuvent aider un utilisateur à retrouver un objet qui a été déplacé depuis la captation et qui est possiblement en dehors de la portion de l'environnement couramment visualisé par l'utilisateur consommateur.

Dans le cas d'un enregistrement périodique d'informations du jumeau numérique dans l'élément multimédia, le procédé peut comprendre une interpolation des valeurs des paramètres de jumeau numérique lors du rendu (par exemple une interpolation des positions des objets d'intérêt (et leur orientation) entre deux enregistrements).

On note que si la figure 5 illustre dans intervalles temporels [t1; t2] et [t3; t4] identiques, par simplicité, dans certains modes de réalisation ces intervalles peuvent être différents. Dans ce cas, le procédé peut comprendre une accélération ou au contraire un ralentissement du rendu de l'élément multimédia (rendu des informations du jumeau numérique et optionnellement du contenu) pour correspondre à une durée de restitution désirée. De plus l'utilisateur consommateur du contenu peut avoir la possibilité d'agir sur le rendu de l'élément multimédia (mis en pause, et/ou retour arrière, et/ou ralentissement de la vitesse de restitution (pour une restitution notamment avec une vitesse inférieure à une vitesse « nominale » correspondant à la vitesse de captation du contenu) et/ou au contraire accélération de la vitesse de restitution (pour une restitution avec une vitesse supérieure à la vitesse nominale notamment) . Dans de tels modes de réalisation, le rendu des informations du jumeau numériques peut être adapté en conséquence, de façon à ce que les informations du jumeau numérique restent synchronisées temporellement avec le contenu rendu.

Les procédés d'obtention et de rendu enrichi peuvent trouver des applications dans de nombreux domaines, professionnels ou personnels, pour faire face par exemple à des situations où un utilisateur « producteur » doit expliquer une situation à un utilisateur « consommateur » en lien avec l'environnement physique qui l'entoure. On peut ainsi citer des domaines tels que l'industrie, la maintenance, l'entreprise digitale, l''archivage et le partage d'informations , et/ou la géolocalisation

Selon un premier exemple, les procédés de la présente demande peuvent offrir une alternative à l'envoi d'un message audio entre opérateurs d'une chaîne de production (« Quand tu arriveras demain et que tu seras devant la découpeuse, celle au fond de l'usine, à droite, fais attention : le levier d'activation de la coupeuse à gauche est très difficile à baisser. Il est dangereux. Utilise plutôt le bouton que tu trouveras en dessous de la zone d'urgence. Pas le bouton poussoir mais le petit juste à côté »). Ainsi, grâce à l'invention, il peut être proposé un rendu d'un message multimédia mettant plus facilement en évidence un objet d'intérêt (ici le « petit bouton poussoir ») et évitant ainsi des erreurs d'appréciation qui pourraient être lourdes de conséquence pour un opérateur « consommateur ».

Selon un second exemple, les procédés de la présente demande peuvent aider à décrire un objet d'intérêt dans un musée ou un bâtiment historique.

Selon un troisième exemple, les procédés de la présente demande peuvent aider au rendu conditionnel (après le succès d'un utilisateur « consommateur » dans une résolution d'énigme par exemple) d'un message d'étape lors d'un jeu de géolocalisation.

Dans une variante (non illustrée), l'élément multimédia peut être enrichi lors/après une mise en oeuvre du procédé de rendu par application (à nouveau) du procédé d'obtention d'un élément multimédia. Par exemple, aux informations d'un premier jumeau numérique et à l'optionnel contenu audiovisuel déjà contenus dans l'élément multimédia, et représentatifs d'au moins un premier objet d'intérêt pendant une première période de captation, peuvent être ajoutées d'autres informations d'un second jumeau numérique et optionnellement un second contenu audiovisuel, représentatifs d'au moins un second objet d'intérêt pendant un seconde période de captation selon le procédé d'obtention déjà décrit . Une telle variante peut par exemple permettre à un consommateur d'un élément multimédia de répondre à un utilisateur producteur de cet élément multimédia en lui transmettant une version enrichie de cet élément multimédia.

## Revendications

1. **Procédé d'obtention** d'un élément multimédia, ledit procédé comprenant une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel.

2. Dispositif électronique comprenant un moins un processeur configuré pour mettre en oeuvre une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel.

3. Procédé d'obtention selon la revendication 1, ou dispositif électronique selon la revendication 2, où ledit élément multimédia comporte en outre au moins un contenu audiovisuel obtenu à partir dudit flux audiovisuel.

4. Procédé d'obtention selon la revendication 3, ou dispositif électronique selon la revendication 3, où ledit contenu audiovisuel est obtenu par extraction à partir dudit flux audiovisuel .

5. Procédé d'obtention selon la revendication 3 ou 4, ou dispositif électronique selon la revendication 3 ou 4, où ledit contenu audiovisuel est obtenu par transformation d'au moins une portion dudit flux audiovisuel.

6. Procédé d'obtention selon l'une des revendications 1 ou 3 à 5, ou dispositif électronique selon l'une des revendications 2 à 5, où ledit premier objet est sélectionné, parmi des objets d'intérêt détectés dans ledit flux audiovisuel, en tenant compte d'une position courante et/ou une orientation courante dudit premier objet dans au moins une scène dudit flux audiovisuel relativement à au moins une position et/ou une orientation d'au moins un second objet d'intérêt dudit flux audiovisuel.

7. Procédé d'obtention selon la revendication 6, ou dispositif électronique selon la revendication 6, où ledit premier objet, respectivement ledit second objet, est sélectionné, parmi des objets d'intérêt détectés dans ledit flux audiovisuel, en tenant compte d'une similarité visuelle et/ou auditive entre ledit premier objet, respectivement ledit second objet, et au moins un objet de référence.

8. Procédé d'obtention selon la revendication 6 ou 7, ou dispositif électronique selon la revendication 6 ou 7, où ledit premier objet, respectivement ledit second objet, est sélectionné, parmi des objets d'intérêt détectés dans ledit flux audiovisuel, en tenant compte d'une désignation visuelle et/ou audio dudit premier objet, respectivement dudit second objet, dans au moins une scène dudit flux audiovisuel.

9. Procédé d'obtention selon l'une des revendications 6 à 8, ou dispositif électronique selon l'une des revendications 6 à 8, où ledit premier objet, respectivement ledit second objet, est sélectionné, parmi des objets d'intérêt détectés dans ledit flux audiovisuel, en tenant compte d'une désignation manuelle dudit premier objet, respectivement dudit second objet, via une interface utilisateur.

10. Procédé d'obtention selon l'une des revendications 1 ou 3 à 9, ou dispositif électronique selon l'une des revendications 3 à 9, où ledit élément multimédia créé comprend des valeurs relatives à au moins deux paramètres dudit jumeau numérique et où ledit procédé comprend, après ladite création, un filtrage desdites valeurs desdits paramètres.

11. **Procédé de rendu** enrichi relatif à au moins un premier objet physique d'intérêt, ledit procédé comprenant :
- une obtention d'un élément multimédia donnant accès à au moins un contenu audiovisuel relatif au moins audit premier objet physique d'intérêt et à au moins une première valeur d'au moins un premier paramètre d'un jumeau numérique, ladite première valeur étant obtenue lors d'une captation d'un flux audiovisuel, ledit contenu audiovisuel étant obtenu à partir dudit flux audiovisuel, et ledit jumeau numérique étant relatif au moins audit premier objet physique d'intérêt ;
- une obtention d'au moins une première représentation audiovisuelle d'au moins une première portion dudit premier objet physique d'intérêt tenant compte de ladite première valeur obtenue dudit paramètre dudit jumeau numérique;
- un rendu conjoint de ladite première représentation audiovisuelle et d'au moins une partie dudit contenu audiovisuel.

12. Dispositif électronique comprenant un moins un processeur configuré pour:
- une obtention d'un élément multimédia donnant accès à au moins un contenu audiovisuel relatif au moins à un premier objet physique d'intérêt et à au moins une première valeur d'au moins un premier paramètre d'un jumeau numérique, ladite première valeur étant obtenue lors d'une captation d'un flux audiovisuel, ledit contenu audiovisuel étant obtenu à partir dudit flux audiovisuel, et ledit jumeau numérique étant relatif au moins audit premier objet physique d'intérêt ;
- une obtention d'au moins une première représentation audiovisuelle d'au moins une première portion dudit premier objet physique d'intérêt tenant compte de ladite première valeur obtenue dudit paramètre dudit jumeau numérique;
- un rendu conjoint de ladite première représentation audiovisuelle et d'au moins une partie dudit contenu audiovisuel.

13. Procédé de rendu enrichi selon la revendication 12, où ledit rendu conjoint est mis en oeuvre de façon conditionnelle par un dispositif électronique implémentant ledit procédé en tenant compte d'une présence d'un intervenant dans un environnement physique dudit dispositif électronique.

14. Procédé de rendu enrichi selon la revendication 13, où ledit rendu conjoint est mis en oeuvre de façon conditionnelle en tenant compte d'un profil dudit intervenant présent et/ou d'une proximité géographique entre ledit intervenant présent et un équipement dudit environnement physique.

15. Système comprenant au moins :
un premier dispositif électronique comprenant un moins un processeur configuré pour une création d'un élément multimédia donnant accès à au moins une première valeur d'au moins un premier paramètre d'un jumeau numérique, ladite première valeur étant obtenue lors d'une_captation d'un flux audiovisuel, et ledit jumeau numérique étant relatif à au moins un premier objet physique d'intérêt capté par ledit flux audiovisuel ; et
au moins un second dispositif électronique comprenant un moins un processeur configuré pour un rendu enrichi dudit au moins un premier objet physique d'intérêt, une mise en œuvre dudit rendu enrichi comprenant:
• une obtention dudit élément multimédia, ledit élément multimédia donnant accès à ladite au moins une première valeur dudit au moins un premier paramètre dudit jumeau numérique,
• une obtention d'au moins une première représentation audiovisuelle d'au moins une première portion dudit premier objet d'intérêt tenant compte de ladite première valeur obtenue dudit paramètre dudit jumeau numérique;
• un rendu de ladite première représentation audiovisuelle.
